# EUROPÄISCHE PATENTSCHRIFT

(11) **EP 0 478 950 B1**
(45) Veröffentlichungstag und Bekanntmachung des Hinweises auf die Patenterteilung: **04.10.1995**
(21) Anmeldenummer: 91114399.8
(22) Anmeldetag: 28.08.1991
(51) Int. Cl.: G01M 3/16, G01M 3/38

(54) **Vorrichtung zum Erfassen und Melden von Flüssigkeiten**
Device for detecting and signalling fluids
Dispositif de détection et de signalisation de fluides

(30) Priorität: 05.10.1990 DE 4031522
(43) Veröffentlichungstag der Anmeldung: 08.04.1992
(73) Patentinhaber: Krauleidies, Horst, Dipl.-Ing., D-22301 Hamburg (DE)
(72) Erfinder: Krauleidies, Horst, Dipl.-Ing., D-22301 Hamburg (DE)
(74) Vertreter: Niedmers, Ole, Dipl.-Phys.

(56) Entgegenhaltungen:
- CH-A- 662 437
- FR-A- 2 453 402
- US-A- 3 942 167
- Datenblatt "Optoelektronische Füllstandssensoren; LL101101"der Firma Honeywell
- Datenblatt "Optoelektronischer Niveausensor LLDS01D" der Firma Senlux Electronic GmbH

## Beschreibung

Die Erfindung betrifft eine Vorrichtung zum Erfassen und Meiden von auf einer zu überwachenden Ebene sich sammelnden zu erfassenden Flüssigkeiten, umfassend eine im Betrieb auf der Ebene ruhende Detektoreinheit und eine Betriebseinheit, wobei die Detektoreinheit und Betriebseinheit elektrisch miteinander verbunden sind.

Sowohl im gewerblichen Bereich wie Fabrikationsräumen, Werkstätten, Lagern, in Büros, Studios, öffentlichen Einrichtungen als auch im privaten Bereich wie Wohnungen und dgl. können ungeheure Schäden dadurch entstehen, daß Flüssigkeiten, beispielsweise Wasser, Heizungsanlagenflüssigkeiten, die unterschiedlichsten Kohlenwasserstoffe wie Dieselöl, Benzin usw. auslaufen, und der Austritt dieser vorgenannten aber auch beliebiger anderer Flüssigkeiten nicht frühzeitig bemerkt wird.

Es sind die verschiedensten, teilweise technisch extrem aufwendigen Versuche unternommen worden, Vorrichtungen, Einrichtungen oder Anlagen bereitzustellen, Jola-Leckage-Detektor, System KR/OW, Kobold Messring Kaltleiterschalter für elektrisch nicht leitende Flüssigkeiten, die in der Lage sind, sich auf einen im wesentlichen ebenen Untergrund, beispielsweise allen Böden, Fußböden oder Büroböden sammelnden Flüssigkeiten, die beispielsweise aufgrund eines Defekts von Förderleitungen ausgetreten sind, zu detektieren und nachfolgend einen Alarm auszulösen. Obwohl die Detektierung einer Flüssigkeit wie Wasser, das, zumindest wenn es aus Heizsystemen stammt, verhältnismäßig gut elektrisch leitfähig ist, noch verhältnismäßig einfach zu realisieren ist, hat es bisher extreme Schwierigkeiten bereitet und es ist auch bislang keine Lösung gefunden worden, Detektierungseinrichtungen zu schaffen, die sowohl mit der gleichen Empfindlichkeit in der Lage sind, aus einer Heizungsanlage stammendes Wasser, aus einer Trinkwasserversorgung stammendes Wasser als auch aus einer Klimaanlage stammendes Wasser zu detektieren. Eine gemeinsame Erfassung austretenden Wassers aus den vorgenannten unterschiedlichen Quellen ist deshalb so extrem schwierig, weil die elektrische Leitfähigkeit aus einem Heizkreislauf stammenden Wassers gut ist, die aus einem Trinkwasserversorgungssystem stammendem Wasser hingegen schwach ist, wobei das aus einer Klimaanlage stammende Wasser, weil es bestimmungsgemäß demineralisiert sein muß, überhaupt nicht elektrisch leitfähig ist. Bisher mußten jeweils gesonderte Einrichtungen vorgesehen sein, um, abgestimmt auf die sehr unterschiedliche Leitfähigkeit des unterschiedlichen Wassers, ein derartiges Problem überhaupt ansatzweise lösen zu können.

Wie eingangs erwähnt, sind jedoch die Probleme mit der Erfassung der unterschiedlichen Flüssigkeit "Wasser" nicht erschöpft, vielmehr bereiten andere Flüssigkeiten wie Dieselöl, flüssige Lösungsmittel, Harze, Reinigungsflüssigkeiten, für Kühlzwecke verwendete Flüssigkeit usw. noch viel größere Probleme ihrer Erfassung beim Austritt bzw. Sammeln auf einer Ebene, beispielsweise dem Boden einer Werkstatt oder einer Lagerhalle, da sie in der Regel überhaupt nicht elektrisch leitfähig sind und konduktive Mittel zur Erfassung dieser Flüssigkeiten, wie sie bei wässrigen Lösungen und Wasser an sich möglich sind, vollständig versagen. Man hat versucht, derartige Flüssigkeiten kapazitiv zu erfassen und die physikalische Eigenschaft der unterschiedlich großen die Elektrizitätskonstante εᵣ auszunutzen, wobei beispielsweise die Flüssigkeit Öl eine Dielektrizitätskonstante im Wert von εᵣ =2-3 aufweist, während Wasser eine Dielektrizitätskonstante von εᵣ = 81 aufweist. Sollen also Flüssigkeitspegel nach der kapazitiven Methode erfaßt werden, würde nach einer überschlagsmäßigen Abschätzung Wasser schon mit einem Pegel von 2 mm erfaßt werden können, während Öl aufgrund seiner gegenüber Wasser sehr kleinen Dielektrizitätskonstanten erst mit einem Pegel von ca. 10 mm erfaßt werden könnte. Der Weg der kapazitiven Pegelbestimmung ist bei Flüssigkeiten mit unterschiedlichen Dielektrizitätskonstanten ohne einen außerordentlichen apparativen- bzw. Meßaufwand nicht durchführbar.

Schließlich sei noch ein weiteres gravierendes Problem im Zusammenhang mit der Erfassung von auf einer Ebene sich sammelnden Flüssigkeiten unterschiedlicher Art hingewiesen, daß nämlich die Ebene beispielsweise nicht aus einem glatten Metall, Kunststoff oder Betonuntergrund, sondern aus einem textilen Belag bestehen kann, wie er nicht nur in privat genutzten Räumen, sondern auch vielfach in gewerblich genutzten Räumen anzufinden ist. Bei Defekten des Warmwasserheizsystems oder Wasserrohren schlechthin wird nämlich, anders als bei einem glatten Boden bzw. einer glatten Ebene, zumeist erst eine kleine Stelle im textilen Belag durchfeuchtet, wobei vielfach diese Feuchtstelle durch Einrichtungsgegenstände verdeckt ist und somit auch nicht wahrgenommen wird. So kann über längere Zeit Wasser oder sonstige Flüssigkeit unbemerkt auslaufen, was schwere Schäden zur Folge hat. Hinzu kommt noch, daß die Struktur des textilen Belags, beispielsweise der im Grundkörper befestigte Teppichflor, erheblich Flüssigkeitsmengen binden und am Abfließen hindern kann, wenn beispielsweise der Fußboden bzw. die Ebene eine geringe Neigung aufweist.

Es ist Aufgabe der vorliegenden Erfindung, eine Vorrichtung der eingangs genannten Art zu schaffen, die geeignet ist, eine Großzahl unterschiedlicher Flüssigkeiten mit großer Präzision zu erfassen, die zudem in der Lage ist, sowohl auf unstrukturierten, glatten Ebenen, strukturierten Ebenen als auch auf textilem Gewebe unterschiedlichster Art Flüssigkeiten, die sich dort sammeln, zu erfassen, die sehr einfach im Aufbau ist und beim Aufstellen bzw. Installieren keines Fachmannes bedarf, die sehr einfach und kostengünstig herstellbar ist und somit in großen Mengen einsetzbar ist und zur Erhöhung der Allgemeinsicherheit beitragen kann.

Gelöst wird die Aufgabe gemäß der Erfindung dadurch, daß die Detektoreinheit wenigstens ein voneinander beabstandetes Elektrodenpaar zur konduktiven Erfassung der Flüssigkeit aufweist, über das es auf der Ebene aufliegt, und eine mit einer optisch aktiven Fläche, deren optischen Eigenschaften sich mit einer Benetzung der Fläche mit Flüssigkeit ändern, auf die Ebene gerichtete Sensoreinrichtung zur optischen Erfassung der Flüssigkeit.

Der Vorteil der erfindungsgemäßen Vorrichtung besteht im wesentlichen darin, daß durch die Kombination der Elektroden, die nach dem konduktiven Prinzip arbeiten, auf einfache Weise der zwischen den Elektroden fließende Strom, wenn beispielsweise eine leitfähige Flüssigkeit austritt, als Alarmsignal ausgewertet werden kann, so daß bereits sehr dünne Flüssigkeitsfilme von weniger als 0,1 mm Dicke erfaßt werden können. Mit der Sensoreinrichtung können nach dem optischen Prinzip Flüssigkeiten beliebiger Art bei Flüssigkeitspegeln von weniger als 2,5 mm Dicke erfaßt werden. Bei derartigen Sensoren wird das Prinzip der Lichtbrechung an der Grenzfläche fester Stoffe ausgenutzt, wobei ein mit Flüssigkeit benetzter Sensor eine andere Lichtbrechung als ein nichtbenetzter Sensor aufweist. Sowohl die Elektroden der Vorrichtung als auch der Sensor arbeiten fortwährend und aufeinander abgestimmt zur Erfassung einer Flüssigkeit der unterschiedlichsten Art, wobei auch Flüssigkeiten, die leitfähige Eigenschaften haben, beispielsweise Heizsystemwasser, in der Vorrichtung von beiden Erfassungsteilsystemen (Elektroden, Sensor) erfaßt werden.

Gemäß einer vorteilhaften Ausgestaltung der Erfindung sind die Elektroden im wesentlichen parallel zur Ebene, auf der die Vorrichtung steht, flächenförmig begrenzt, wobei vorzugsweise ein von der Fläche wegstehender zapfenartiger Vorsprung vorhanden ist. Dieser Vorsprung dient dazu, den Ansprechpegel der Vorrichtung für nichtleitende Flüssigkeiten noch mehr zu verringern. Wird eine derart ausgerüstete Vorrichtung auf einem textilen Belag positioniert, dringt der Vorsprung mühelos in die textile Struktur, beispielsweise den Flor eines Teppichs, so tief ein, daß der flächenförmig ausgebildete Teil der Elektrode sicher auf der Oberfläche des textilen Belages zum Aufliegen kommt.

Gemäß einer weiteren vorteilhaften Ausgestaltung der Vorrichtung ist der Vorsprung einstückig mit der Elektrode ausgebildet, d. h. die Elektrode kann grundsätzlich auf kostengünstige Weise als einstückiges Drehteil hergestellt werden.

Vorteilhafterweise ist die Länge des Vorsprungs unterschiedlich einstellbar, d. h. es können einerseits vorteilhafterweise unterschiedliche Elektroden mit unterschiedlich langen Vorsprüngen bereitgestellt werden, die auf geeignete Weise mit der Detektoreinheit verbunden werden, beispielsweise durch hineinstecken oder hineinschrauben, es kann jedoch auch andererseits vorteilhaft sein, den Vorsprung über eine lösbare mechanische Verbindung mit der Elektrode zu verbinden, d. h. die Elektrode zu standardisieren und die Vorsprünge unterschiedlicher Länge über eine Steckverbindung, eine Schraubverbindung oder eine Verbindung sonstiger Art lösbar mit der übrigen Elektrode zu verbinden.

Grundsätzlich ist es vorteilhaft, die Länge des zapfenartigen Vorsprungs derart zu bemessen, daß die Sensoreinrichtung beim Stand der Vorrichtung auf einer festen Ebene wenigstens mit ihrer optisch aktiven Fläche die Ebene nicht berührt. Damit wird u. a. ein gewisser mechanischer Schutz des Sensors erreicht.

Die Detektoreinheit, die vorzugsweise aus einem kastenförmigen Gehäuse mit ggf. kreisförmigem Querschnitt besteht, kann eine Mehrzahl von Elektrodenpaaren aufweisen, die an der Unterseite des Gehäuses, d. h. an der zur Ebene, auf der die Vorrichtung positioniert wird, benachbarten Gehäusefläche angeordnet sind. Unabhängig von der Zahl der Elektrodenpaare ist es vorteilhaft, die Sensoreinrichtung wenigstens mit ihrer optisch aktiven Fläche zwischen dem Elektrodenpaar bzw. dem Elektrodenpaaren anzuordnen, wodurch u. a. ein gewisser mechanischer Schutz der empfindlichen Sensorfläche erreicht wird und auf den Sensor von außen einfallendes Fremdlicht vermieden wird.

Die elektronische Auswerteschaltung der Vorrichtung ist nach allgemein bekannten elektronischen Schaltprinzipien aufgebaut, sie ist jedoch so konzipiert, daß vorteilhafterweise die elektrische Stromaufnahme der Detektoreinheit bei erfaßter Flüssigkeit Bemessungsgröße für eine elektrische und/oder akustische Meldung der Vorrichtung ist. Als Bemessungsgröße die elektrische Stromaufnahme vorzunehmen hat den wesentlichen Vorteil, daß eine elektrische Verbindung zwischen Detektoreinheit und Betriebseinheit aus einer 2-adrigen Verbindung bestehen kann, die mühelos verlegt und ggf. auch mühelos verlängert werden kann. Zudem hat diese Art der Bemessungsgröße den Vorteil, daß auch Defekte wie eine Unterbrechung dieser Leitungsverbindung oder auch ein Kurzschluß in der Detektoreinheit erfaßt und gemeldet werden kann.

Die Erfindung wird nun unter Bezugnahme auf die nachfolgenden schematischen Zeichnungen anhand eines Ausführungsbeispieles eingehend beschrieben. Darin zeigen:
- Fig. 1: in der Seitenansicht im Schnitt die Detektoreinheit der Vorrichtung, die auf einer festen Ebene, beispielsweise einem Werkstattboden steht,
- Fig. 2: einen Ausschnitt der Detektoreinheit, die mit ihrer Elektrode und der lichtempfindlichen Fläche der Sensoreinrichtung auf bzw. teilweise eingedrückt in einem ebenen textilen Belag ruht, und
- Fig. 3: die Vorrichtung, bestehend aus der Betriebseinheit und der damit verbundenen Detektoreinheit in Form einer Blockdarstellung.

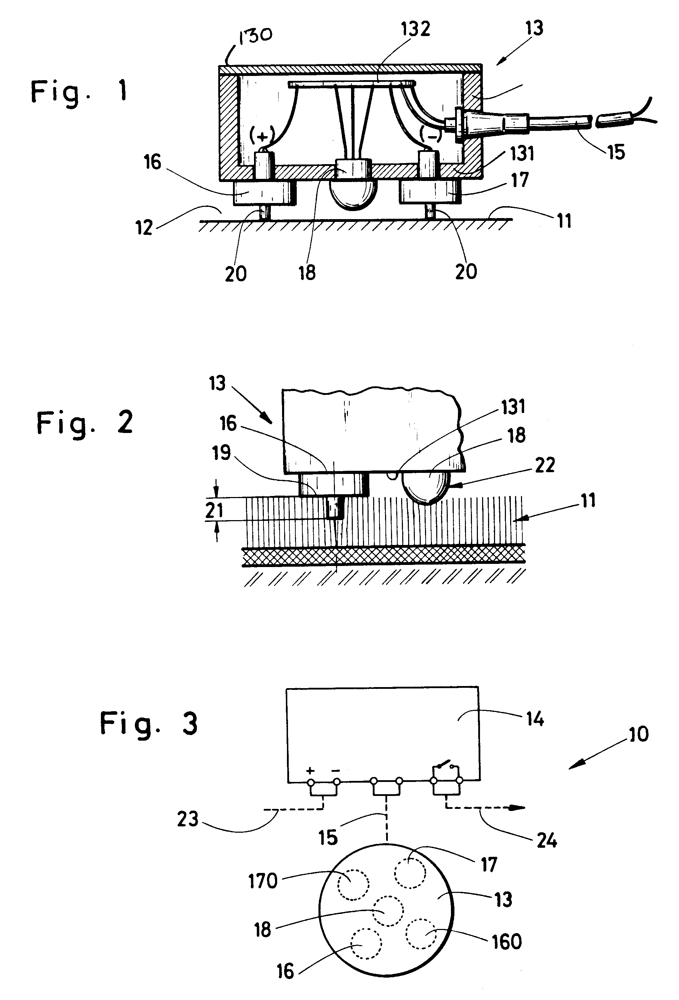

Die Vorrichtung 10 besteht im wesentlichen aus einer Detektoreinheit 13 und einer Betriebseinheit 14, die über eine Verbindung 15 in Form einer zwei- oder mehradrigen Leitung miteinander verbunden sind, vgl. Fig. 3. Die Detektoreinheit 13 wird von außen mit einer Versorgungsspannung 23 versorgt. Die Auswertung der Erfassungsergebnisse der Elektroden 16, 17 bzw. der Sensoreinrichtung 18 der Detektoreinheit 13 wird in der Betriebseinheit 14 durchgeführt, und zwar nach allgemein bekannten elektronischen Prinzipien, so daß an dieser Stelle darauf nicht weiter eingegangen wird. In der Betriebseinheit 14 ist auch eine Alarmeinheit vorgesehen, die der elektrischen und/oder akustischen Meldung einer erfaßten Flüssigkeit 12 dient. Ggf. kann die Alarmeinheit auch noch über eine elektrische Verbindung 24 mit einer Alarmleitzentrale oder einen Auswerterechner, was insbesondere bei großen zu überwachenden Gebäuden sinnvoll ist, verbunden sein.

Die Detektoreinheit 13 besteht aus einem lösbar verschließbaren Gehäuse 130, das bei der in den Figuren dargestellten Ausgestaltung einen zylindrischen Querschnitt aufweist. Das Gehäuse besteht vorzugsweise aus Kunststoff, so daß keine gesonderten isolierenden Maßnahmen für die Aufnahme der Elektroden 16, 17 im Boden 131 des Gehäuses vorgesehen zu werden brauchen, was gleichermaßen für die Aufnahme der Sensoreinrichtung 18 im Boden 131 gilt. Im Gehäuse 130 ist auch eine Leiterplatte 132 vorhanden, die zur Aufnahme von hier nicht gesondert dargestellten elektronischen Bauteilen und zur Aufnahme der Kabelverbindungen zwischen den Elektroden 16, 17 und der Sensoreinrichtung 18 dient, wobei gleichzeitig die elektrische Verbindung 15 zur Betriebseinheit 14 ebenfalls mit der Leiterplatte 132 verbunden ist. Die auf der Leiterplatte 132 ausgebildete elektrische Schaltung ist nach allgemein bekannten elektronischen Schaltprinzipien aufgebaut, so daß an dieser Stelle auf diese nicht weiter eingegangen zu werden braucht.

Aus der Darstellung von Fig. 3 ist durch die strichpunktiert dargestellten Elektroden 16, 17 und 160, 170 ersichtlich, daß insgesamt 4 Elektroden im Boden 131 der Detektoreinheit 13 angeordnet sind. Diese Darstellung ist jedoch lediglich beispielhaft anzusehen, denn es kann grundsätzlich, ausgehend von einer Minimalbestückung der Vorrichtung 10 mit einem Elektrodenpaar 16, 17, eine beliebige Zahl von Elektrodenpaaren vorgesehen werden, und zwar je nach Anwendungsfall. Die Elektroden 16, 17 können als einstückige Drehteile ausgebildet sein und entweder fest im Gehäuse 130 angeordnet sein, oder es kann aber auch Ausgestaltungen geben, bei denen die Elektroden 16, 17 als Gesamteinheiten in das Gehäuse 130 eingeschraubt oder sonstwie dort befestigt werden können, wobei eine beliebige geeignete Zahl von Befestigungsmöglichkeiten für Elektrodenpaare im Boden 131 der Detektoreinheit 13 vorgesehen werden können,so daß im Bedarfsfall die Zahl der benötigten Elektrodenpaare 16, 17 variiert werden kann.

Es kann auch sinnvoll sein, die Elektroden 16, 17, generell im Gehäuse 130 vorzusehen und lediglich die von der parallel zur Ebene 11, auf der die Vorrichtung 10 steht, ausgebildeten Elektrodenfläche 19 wegstehenden Vorsprünge 20, die eine gewisse Länge 21 aufweisen, unterschiedlich lang auszubilden, so daß sie den Erfordernissen des Einsatzes, sie beispielsweise auf einer absolut glatten Ebene 11 (Hallenfußboden) oder auf einer Ebene 11 in Form eines textilen Belags anzuordnen, entsprechen. Einer unterschiedlichen Florhöhe textilen Belags kann durch Variation der Vorsprungslänge 21 Rechnung getragen werden.

Wie aus Fig. 2 ersichtlich ist, kann die Elektrode 16 mühelos in einen textilen Belag eindringen, und zwar so tief, daß die vorzugsweise kreisrunde Elektrodenfläche 19 sicher auf der Floroberfläche des textilen Belages zum Anliegen kommt.

Zwischen den Elektroden 16, 17 bzw. 160, 170 ist die Sensoreinrichtung 18 angeordnet, die mit ihrer optisch aktiven Fläche 22 in Richtung der Ebene 11, auf der die Vorrichtung 10 positioniert wird, ausgerichtet ist. Bei der Positionierung auf einer festen glatten Ebene 11 gemäß Fig. 1 berührt der Sensor 18 mit seiner optisch aktiven Fläche 22, bedingt durch die Länge 21 des Vorsprungs 20, die Ebene nicht. Damit ist ein gewisser mechanischer Schutz des Sensors 18 gewährleistet.

Bei der Darstellung von Fig. 2 gewährleisten die Elektroden 16 und die hier nicht dargestellte andere Elektrode des Elektrodenpaares einen ausreichenden Spalt zwischen der Unterseite des Bodens 131 und der durch die Oberseite des Teppichflors eines textilen Belages gebildeten Ebene, so daß Flüssigkeit unter die Unterseite des Gehäuses 130 eindringen und den Sensor an seiner optisch aktiven Fläche 22 benetzen kann. Dabei ist die Höhe der Elektroden so gewählt, daß beim Aufliegen der Detektoreinheit 13 auf einem textilen Belag der optische Sensor 18 geringfügig in die textile Struktur bzw. den Flor, beispielsweise in einer Tiefe von 1 mm, eintauchen kann. Dadurch wird bewirkt, daß bereits Flüssigkeitspegel von weniger als 1,5 mm erfaßt und gemeldet werden können. Da die Vorsprünge 20 in die textile Struktur eintauchen, werden elektrisch leitfähige Flüssigkeiten 12 schon dann erfaßt, wenn eine durchgängige Durchfeuchtung noch nicht zu sichtbaren Flüssigkeitsspiegeln oberhalb des textilen Belages geführt hat.

Wie schon erwähnt, wird durch die zweiadrig ausgebildete elektrische Verbindung zwischen der Detektoreinheit 13 und der Betriebseinheit 14 der Versorgungs- und Signalstrom geführt. Bei verpoltem Anschluß bewirkt eine eingebaute Halbleiterdiode eine signifikante Stromänderung und löst damit ein Alarmsignal aus. So ist es auch gewährleistet, daß auch fachlich unkundige Personen die Vorrichtung 10 betriebsgerecht in Funktion setzen können. Wird als Versorgungsspannung zudem noch eine Kleinspannung vorgesehen, ist jegliche Gefährdung von Personen oder Sachen ausgeschlossen.

### Bezugszeichenliste

- 10: Vorrichtung
- 11: Ebene
- 12: Flüssigkeit
- 13: Detektoreinheit
- 130: Gehäuse
- 131: Boden
- 132: Leiterplatte
- 14: Betriebseinheit
- 15: Verbindung (elektrisch)
- 16: Elektrode
- 160: - " -
- 17: - " -
- 170: - " -
- 18: Sensoreinrichtung
- 19: Elektrodenfläche
- 20: Vorsprung
- 21: Elektrodenfläche
- 22: optisch aktive Fläche
- 23: Versorgungsspannung
- 24: Verbindung

## Patentansprüche

1. Vorrichtung zum Erfassen und Melden von auf einer zu überwachenden Ebene sich sammelnden zu erfassenden Flüssigkeiten, umfassend eine in Betrieb auf der Ebene ruhende Detektoreinheit und eine Betriebseinheit, wobei die Detektoreinheit und die Betriebseinheit elektrisch miteinander verbunden sind, dadurch gekennzeichnet, daß die Detektoreinheit (13) wenigstens ein voneinander beabstandetes Elektrodenpaar (16, 17) zur konduktiven Erfassung der Flüssigkeit (12) aufweist, über das es auf der Ebene (11) aufliegt, und eine mit einer optisch aktiven Fläche (22), deren optischen Eigenschaften sich mit einer Benetzung der Fläche (22) mit Flüssigkeit ändern, auf die Ebene (11) gerichtete Sensoreinrichtung (18) zur optischen Erfassung der Flüssigkeit (12).

2. Vorrichtung nach Anspruch 1, dadurch gekennzeichnet, daß die Elektroden (16, 17) im wesentlichen parallel zur Ebene (11) flächenförmig (19) begrenzt sind und einen von der begrenzenden Fläche wegstehenden zapfenartigen Vorsprung (20) aufweisen.

3. Vorrichtung nach Anspruch 2, dadurch gekennzeichnet, daß der Vorsprung (20) einstückig mit der Elektrode (16; 17) ausgebildet ist.

4. Vorrichtung nach Anspruch 2, dadurch gekennzeichnet, daß die Länge (21) des Vorsprungs (20) unterschiedlich einstellbar ist.

5. Vorrichtung nach Anspruch 2, dadurch gekennzeichnet, daß der Vorsprung (20) über eine lösbare mechanische Verbindung mit der Elektrode (16; 17) verbindbar ist.

6. Vorrichtung nach einem oder mehreren der Ansprüche 1 bis 4, dadurch gekennzeichnet, daß die Länge (21) des Vorsprungs (20) derart bemessen ist, daß die Sensoreinrichtung (18) beim Stand der Vorrichtung (10) auf der festen Ebene (11) wenigstens mit ihrer optisch aktiven Fläche (22) die Ebene (11) nicht berührt.

7. Vorrichtung nach einem oder mehreren der Ansprüche 1 bis 6, dadurch gekennzeichnet, daß die Sensoreinrichtung (18) wenigstens mit ihrer optisch aktiven Fläche (22) zwischen den Elektroden (16, 17) angeordnet ist.

8. Vorrichtung nach einem oder mehreren der Ansprüche 1 bis 7, dadurch gekennzeichnet, daß die elektrische Stromaufnahme der Detektoreinheit (13) bei erfaßter Flüssigkeit (12) Bemessungsgröße für eine elektrische und/oder akustische Meldung der Vorrichtung (10) ist.

## Claims

1. Device for detecting and signalling fluids which have accumulated on a monitored surface plane, involving a detector unit resting on the plane and an operating unit, in which the detector unit and the operating unit are electrically connected, characterized in that the detector unit (13) presents at least one pair of electrodes (16, 17) positioned apart for conductive detection of the fluid (12) while at the same time supporting the unit on the plane, and a sensor (18) pointed at the plane (11) presenting an optically active surface (22) for optical detection of the fluid (12), the optical properties of which surface (22) alter when it is dampened with fluid.

2. Device according to Claim 1, characterized in that the boundary surfaces (19) of the electrodes (16, 17) are substantially planiform and parallel to the plane (11) and each electrode presents a peg-like projection (20) which projects from the boundary surface.

3. Device according to Claim 2, characterized in that the projection (20) and the electrode (16; 17) are designed in one piece.

4. Device according to Claim 2, characterized in that the length (21) of the projection (20) is adjustable.

5. Device according to Claim 2, characterized in that the projection (20) may be connected to the electrode (16; 17) by means of a detachable mechanical joint.

6. Device according to one or more of Claims 1 to 4, characterized in that the length (21) of the projection (20) is designed in such a way that at least the optically active surface (22) of the sensor (18) does not come into contact with the fixed plane (11) when the device (10) is placed on the plane.

7. Device according to one or more of Claims 1 to 6, characterized in that at least the optically active surface (22) of the sensor (18) is positioned between the electrodes (16, 17).

8. Device according to one or more of Claims 1 to 7, characterized in that when a fluid (12) is detected the electrical current consumption of the detector unit (13) is the measuring quantity for an electrical and/or acoustic signal from the device (10).

## Revendications

1. Dispositif pour détecter et signaler des liquides devant être détectés, qui s'accumulent sur un plan à contrôler, comprenant une unité de détection qui, en fonctionnement, est au repos sur le plan, et une unité de commande, l'unité de détection et l'unité de commande étant reliées électriquement entre elles de telle sorte que l'unité de détection (13) possède au moins un couple d'électrodes (16,17), qui sont distantes l'une de l'autre et servent à réaliser la détection par conduction du liquide (12) et au moyen desquelles l'unité est en appui sur le plan (11), et un dispositif formant capteur (18), dont une surface active (22), dont les caractéristiques optiques varient dans le cas d'un mouillage de la surface (22) avec un liquide, est tournée vers le plan (11) et qui sert à détecter optiquement le liquide (12).

2. Dispositif selon la revendication 1, caractérisé en ce que les électrodes (16,17) sont limitées à une configuration planiforme (19), essentiellement parallèlement au plan (11), et possèdent un appendice saillant en forme de téton (20), qui fait saillie à partir de la surface de limitation.

3. Dispositif selon la revendication 2, caractérisé en ce que l'appendice saillant (20) est formé d'un seul tenant avec l'électrode (16;17).

4. Dispositif selon la revendication 2, caractérisé en ce que la longueur (21) de l'appendice saillant (20) est réglable d'une manière variable.

5. Dispositif selon la revendication 2, caractérisé en ce que l'appendice saillant (20) peut être relié à l'électrode (16;17) par l'intermédiaire d'une liaison mécanique amovible.

6. Dispositif selon une ou plusieurs des revendications 1 à 4, caractérisé en ce que la longueur (21) de l'appendice saillant (20) est dimensionnée de telle sorte que le dispositif formant capteur (18) n'est pas en contact, au moins par sa surface (22) active du point de vue optique, avec le plan (11), lorsque le dispositif (10) est en appui sur le plan fixe (11).

7. Dispositif selon une ou plusieurs des revendications 1 à 6, caractérisé en ce que le dispositif formant capteur (18) est disposé de telle sorte qu'au moins sa surface (22) active du point de vue optique est située entre les électrodes (16,17).

8. Dispositif selon une ou plusieurs des revendications 1 à 7, caractérisé en ce que l'absorption de courant électrique de l'unité de détection (13), dans le cas d'un liquide (12) détecté, est une grandeur de dimensionnement pour une signalisation électrique et/ou acoustique du dispositif (10).
